(19) Europäisches Patentamt
European Patent Office
Office européen des brevets

(11) **EP 3 886 394 A1**

(12) **EUROPEAN PATENT APPLICATION**
published in accordance with Art. 153(4) EPC

(43) Date of publication:
**29.09.2021 Bulletin 2021/39**

(21) Application number: **20775160.3**

(22) Date of filing: **13.03.2020**

(51) Int Cl.:
*H04L 29/06* (2006.01)     *H04L 29/08* (2006.01)

(86) International application number:
**PCT/CN2020/079353**

(87) International publication number:
**WO 2021/159575 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.02.2020 CN 202010088877**

(71) Applicant: **Wangsu Science & Technology Co.,
Ltd.
Shanghai 200030 (CN)**

(72) Inventors:
• **HUANG, Meifen
Shanghai 200030 (CN)**
• **HONG, Zhenyu
Shanghai 200030 (CN)**
• **WANG, Xinyuan
Shanghai 200030 (CN)**

(74) Representative: **Vinsome, Rex Martin
Urquhart-Dykes & Lord LLP
The Core
Bath Lane
Newcastle Helix
Newcastle upon Tyne and Wear NE4 5TF (GB)**

(54) **MACHINE LEARNING TECHNIQUE BASED WHITELIST SELF-LEARNING METHOD AND DEVICE**

(57)    The present disclosure discloses a whitelist self-learning method and device based on machine learning technology, which belongs to the technical field of network security. The method includes: aggregating the parameter values of each request parameter of multiple business requests to be learned, to obtain value sets corresponding to each of the request parameters (201); determining the parameter type of the request parameter based on the number of values, the value length, and the value format of each value set through machine learning technology(202); generating feature values of the parameter types of each of the request parameters, and performing security detection on a new business request based on the feature values(203). With the present disclosure, the WAF may quickly and efficiently filter out a large number of normal business requests before the conventional defense process, reducing the security protection burden of the WAF.

Aggregate the parameter values of each request parameter of multiple business requests to be learned, to obtain value sets corresponding to each of the request parameters — 201

Determine the parameter types corresponding to the request parameters based on the number of values, the value length, and the value format of each value set through machine learning technology — 202

Generate feature values of the parameter types corresponding to each of the request parameters, and perform security detection on a new business request based on the feature values — 203

FIG. 1

EP 3 886 394 A1

**Description**

**CROSS REFERENCE TO RELATED APPLICATIONS**

The present disclosure claims priority to China Patent Application No. 202010088877.6 entitled "Whitelist Self-learning Method and Device Based on Machine Learning Technology" and filed on February 12, 2020, which is hereby incorporated by reference in its entirety.

**TECHNICAL FIELD**

The present disclosure relates to the field of network security technology, and in particular, to a whitelist self-learning method and device based on machine learning technology.

**BACKGROUND**

With the rapid development of the Internet and computer technology, the complexity of enterprise business systems keeps changing along with the development of business requirements, and various business requests emerge. With more and more business requirements, the number, types and functions of business requests are increasing, so is the security requirements of enterprise business systems. At present, most enterprises use the WAF (Web Application Firewall) to protect the received business requests to filter out abnormal business requests, so as to ensure the safety of the enterprise business system.

At present, most of the business requests are likely to be normal requests. If the WAF performs security detection on each business request one by one, the invalid detection burden on the WAF will increase greatly, so the WAF generally chooses a whitelist-based security detection method. Part of the existing whitelists need to be configured by the WAF operational personnel, but manually configured whitelists have great limitations, require relatively high level of safety knowledge for the operators, cannot accurately detect all normal business requests and there are many cases of missing and false alarms. Another part of the whitelists use machine learning technology to configure the content simply by learning whether the request parameter belongs to a simple type such as character type or enumeration type, which also easily leads to cases of missing and false alarms. Therefore, at present, there is an urgent need for a security detection method for business requests that does not require manual configuration, has strong applicability, high accuracy, and simple and convenient process.

**SUMMARY**

In order to solve the problems of the existing technology, embodiments of the present disclosure provide a whitelist self-learning method and device based on machine learning technology. The technical solution is listed as follows.

In a first aspect, a whitelist self-learning method based on machine learning technology is provided and the method includes:

aggregating parameter values of each request parameter of multiple business requests to be learned, to obtain value sets corresponding to each of the request parameters;

determining parameter types of the request parameters based on a number of values, a value length and value format of each of the value sets through machine learning technology;

generating feature values of the parameter types of each of the request parameters, and performing security detection on a new business request based on the feature values.

In a second aspect, a whitelist self-learning device based on machine learning technology is provided and the device includes:

an aggregation module, configured to aggregate the parameter values of each request parameter of multiple business requests to be learned to obtain value sets corresponding to each of the request parameters;

a classification module, configured to determine the parameter types of the request parameters based on the number of values, the value length and the value format of each value set through machine learning technology;

a detection module, configured to generate feature values of the parameter types of each of the request parameters, and perform security detection on the new business request based on the feature values.

In a third aspect, a network device is provided, including a processor and a memory. The memory stores at least one instruction, at least one segment of program, a code set, or an instruction set, when loaded and executed by the processor, causing the processor to implement the whitelist self-learning method based on the machine learning technology as described in the first aspect.

In a fourth aspect, a computer-readable storage medium is provided, storing at least one instruction, at least one segment of program, a code set or an instruction set, when loaded and executed by the processor, causing the processor to implement the whitelist self-learning method based on the machine learning technology as described in the first aspect.

The beneficial effects brought by the technical solution provided by the embodiments of the present disclosure are as follows: in the embodiments of the present disclosure, the parameter values of each request parameter of multiple business requests to be learned are aggregated to obtain value sets corresponding to each of the request parameters; the parameter types of the request parameters are determined based on the number of values, the value length and the value format of each value set through machine learning technology; feature values of the parameter types of each of the request parameters is generated, and security detection on the new business request is performed based on the feature values. In this way, machine learning is performed for business requests of different enterprise business systems, and the same request parameters of the same parameter type are aggregated according to a certain algorithm, to calculate the feature values corresponding to different parameter types, and then the business requests are added to a whitelist according to the feature values. Therefore, the WAF may quickly and efficiently filter out a large number of normal business requests before the conventional defense process, reducing the security protection burden of the WAF. The present disclosure may adapt to the security detection requirements of various enterprise business systems, does not require manual configuration, and has strong applicability, high accuracy, and simple and convenient process.

## BRIEF DESCRIPTION OF THE DRAWINGS

In order to illustrate the technical solutions in the embodiments of the present disclosure more clearly, the drawings used in the description of the embodiments will be briefly described below. It is obvious that the drawings in the following description are only some embodiments of the present disclosure. For those skilled in the art, other drawings may also be acquired in accordance with the drawings without any inventive effort.

FIG. 1 is a flowchart of a whitelist self-learning method based on machine learning technology provided by embodiments of the present disclosure;

FIG. 2 is a structural schematic diagram of a whitelist self-learning device based on machine learning technology provided by embodiments of the present disclosure;

FIG. 3 is a structural schematic diagram of a whitelist self-learning device based on machine learning technology provided by embodiments of the present disclosure;

FIG. 4 is a structural schematic diagram of a network device provided by embodiments of the present disclosure.

## DETAILED DESCRIPTION

In order to make the purpose, the technical solution and the advantages of the present disclosure clearer, embodiments of the present disclosure will be further described in details with reference to the accompany drawings.

The embodiments of the present disclosure provide a whitelist self-learning method based on machine learning technology. The method may be applied to the WAF in enterprise business systems, and the method is mainly used to realize whitelist self-learning and perform security detection on business requests using the whitelist. The WAF may combine the whitelist obtained by self-learning through this method with the conventional defense process to perform security detection on the received business request. At the same time, the whitelist may be further optimized during the security detection process to achieve continuous self-learning of the whitelist. Specifically, after receiving a business request, the WAF may first match it with the whitelist to detect whether the business request belongs to the whitelist. If it does, then the business request may be directly sent to the back-end enterprise business system; and if it does not belong to the whitelist, the WAF may analyze the data packet of the business request, and then use the feature values of each parameter type extracted by induction to perform security detection. If the detection passes, the business request is sent to the back-end enterprise business system; if the detection fails, the conventional defense process is entered.

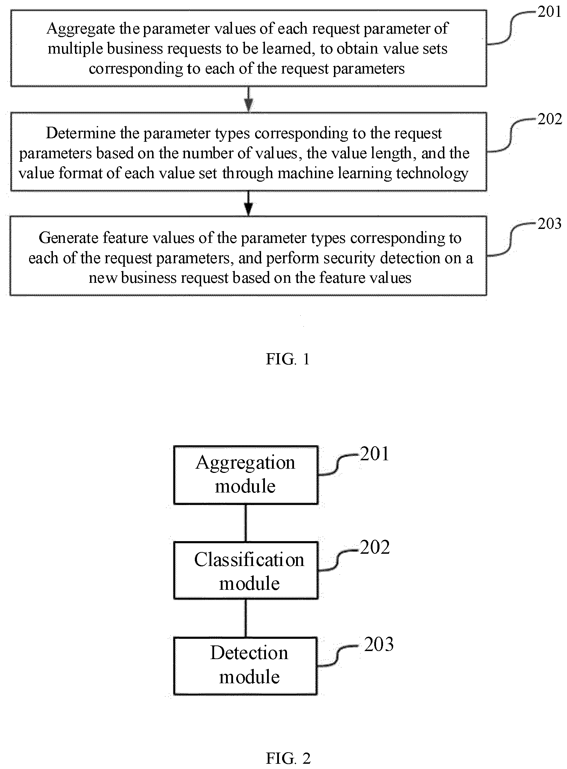

The processing flow shown in FIG. 1 will be described in details below with reference to specific embodiments, and the content may be as follows.

In step 101, the parameter values of each request parameter of multiple business requests to be learned are aggregated to obtain value sets corresponding to each of the request parameters.

In an implementation, the WAF may periodically determine all the request items that meet the machine learning conditions of a website in the process of performing security detection on the business requests, and select all the business requests (may be called as a business request to be learned) over a period of time as the learning material for the whitelist for each of the request items to perform processing such as parameter aggregation and feature extraction.

Specifically, the WAF may classify multiple business requests to be learned, and divide business requests with the same request target and the same request method into the same category. Afterwards, for business requests under each category, the WAF may aggregate the same request parameter in multiple business requests, so as to obtain the value sets corresponding to each request parameter. For example, account login requests of different users may be classified into one category, and then the three request parameters of multiple account login requests, i.e. account identification, account password, and verification information, may be respectively aggregated to generate the value sets corresponding to the three request parameters.

In an embodiment, before the request parameters of the business request are aggregated, data cleaning may be performed first to eliminate business requests that may not be used for machine learning, and the corresponding processing may be as follows: when receiving the target business request, judging whether the target business request is a static file request, whether it is a parameterless request, or whether it contains request parameters with no parameter value; if it does, the target business request is ignored, otherwise the target business request is set as the business request to be learned. The target business request may be any business request for the enterprise business system.

In the implementation, after receiving the target business request, the WAF may first judge whether the target business request meets machine learning requirements. Specifically, the following judgments may be made: first, whether the target business request is a static file request, that is, whether the target business request points to a static resource file; second, whether the target business request is a parameterless request, that is, whether the target business request does not carry any request parameters; third, whether the target business request contains request parameters with no parameter value, that is, the target business request carries request parameters, but the parameter values of the request parameters are void. If the above judgments are met, the WAF may judge that the target business request is not suitable for machine learning, and then may ignore the target business request; if the above judgments are not met, the target business request may be set as the business request to be learned.

In step 102, the parameter types corresponding to the request parameters are determined based on the number of values, the value length and the value format of each value set through machine learning technology.

In the implementation, after obtaining the value sets corresponding to each request parameter by aggregation, the WAF may count all the parameter values in the value set for each value set to obtain the number of values, the value length and the value format of all the parameter values. Among them, the number of values is the number of different values in the value set, the value length is the number of characters included in the parameter value in the value set, and the value format is the format to which the parameters in the value set all conform. For example, in the value set containing 5 parameter values, i.e. "15011111111", "15122222222", "15011111111", "15233333333", "15344444444", there are 4 different values, so the number of values is 4; each parameter value contains 11 digits, so the value length is 11; each parameter value conforms to the format of a mobile phone number, so the value format is the mobile phone number. Afterwards, the WAF may use machine learning technology to determine the parameter type corresponding to each request parameter based on the number of values, the value length and the value format of each value set obtained based on statistics.

In an embodiment, the process of determining the parameter type of the request parameter may specifically be as follows: if the number of values in the value set is less than a preset count threshold, the request parameter is determined to be an enumerated type, otherwise the value lengths in the value set are detected; if the value lengths in the value set are the same, the parameter type of the request parameter is determined according to the value format in the value set; if the value lengths in the value set are different, the parameter type of the request parameter is determined according to the value length and the value content.

In the implementation, when determining the parameter type of each request parameter, the WAF may first count the number of values in the value set corresponding to each request parameter. If the number of values is less than the preset count threshold, the parameter type of a corresponding request parameter may be determined to be an enumerated type. If the number of values is not less than the preset count threshold, the value length in the value set may be further detected. If the value lengths of all parameter values (or more than 90% of the parameter values) in the value set are the same, the corresponding request parameter may be regarded as a fixed-length parameter that conforms to the standard format, and then the parameter type of the request parameter may be determined according to the value format in the value set; if the value lengths of the parameter values in the value set are different from each other, or those of only less than 10% of the parameter values are the same, the parameter type of the corresponding request parameter may be further determined according to the value length and the value content of the parameter values in the value set.

In an embodiment, for the request parameter that is a fixed-length parameter, the method of determining its parameter type may specifically be as follows: comparing all parameter values in the value set with the preset standard formats one by one if the value lengths in the value set are the same; determining that the request parameter format is the target standard format when all parameter values conform to the target standard format; determining that the parameter type of the request is the custom type if all parameter values do not match with all the standard formats.

In the implementation, the WAF may set standard formats for some common parameter types. When a request parameter conforms to a certain standard format, it may be considered that the type of the request parameter is the parameter type corresponding to the standard format. The standard formats may at least include ID card number format, bank card number format, mobile phone number format, telephone number format, date format, time stamp format and IP address format. In this way, if the WAF finds that the value lengths of all parameter values in the value set of a certain type of request parameter are the same, the WAF may compare all the parameter values in the value set with the preset standard formats one by one, for example, firstly judging whether the value format of the parameter values is the ID card number format, if not, continuing to judging whether the value format of the parameter value is the bank card number format, and so on. When all parameter values conform to the target standard format, the WAF may determine that the corresponding request parameter type is the parameter type corresponding to the target standard format. If, after going through all standard formats, it is found that there is no standard format with which all parameter values match, that is, all parameter values do not match with all the standard formats, the WAF may determine that the parameter type of the corresponding request parameter is the custom type.

In an embodiment, for the request parameter that is not a fixed-length parameter, the method of determining its parameter type may specifically be as follows: if the value lengths in the value set are different, whether the data content in the value set is pure numeric value is judged; if it is, the parameter type of the request parameter is determined to be the pure numeric type, otherwise whether the value length is greater than the preset length threshold is judged; if it is, the parameter type of the request parameter is determined to be a long text type, otherwise the parameter type of the request parameter is determined to be a short text type.

In the implementation, for the request parameters that are non-fixed length parameters, the WAF may roughly divide these request parameters into three categories according to the value length and the value content. Specifically, if the value lengths of parameter values in the value set of certain request parameter are different, the WAF may first judge whether the data content of all parameter values in the value set are pure numeric values. Herein, the pure numeric value is the parameter value consisting entirely of Arabic numerals 0-9. If they are pure numeric values, the WAF may directly determine that the parameter type of the request parameter is the pure numeric type; if they are not pure numeric values, the WAF may further determine the request parameters as the long text type or the short text type according to the value length, namely, if the value length is greater than the preset length threshold, the parameter type of the request parameter is determined to be the long text type, and if the value length is less than the preset length threshold, the parameter type of the request parameter is determined to be the short text type.

In step 103, feature values of the parameter types corresponding to each of the request parameters are generated, and security detection on the new business request is performed based on the feature values.

In the implementation, after determining the parameter type of each request parameter in the business request, the WAF may generate feature values of each parameter type, which may be value features that all request parameters of the parameter type should have. In this way, when subsequently receiving a new business request directed to its back-end enterprise business system, the WAF may perform security detection on the new business request based on the feature values of each parameter type.

In an embodiment, the method of determining the feature value of the parameter type of the fixed-length parameter may be as follows: for the parameter type corresponding to any standard format, a format template corresponding to the standard format is generated, and the format template is used as the feature value of the parameter type; for the custom type, the value length corresponding to the custom type and the numeric character set of all request parameters are taken as the feature values of the parameter type.

In the implementation, based on the processing of step 102, the parameter types of the fixed-length parameter may be divided into two types, namely, the parameter type corresponding to the standard format and the custom type. On the one hand, for the parameter type corresponding to any standard format, the WAF may calculate and generate the format template corresponding to the standard format, and then may determine the format template corresponding to each standard format as the feature value of the corresponding parameter type; on the other hand, for the custom type, the WAF may generate a numeric character set included in all request parameters of the custom type, and then determine the value length corresponding to the custom type and the numeric character set as the feature values of the custom type.

In an embodiment, the process of performing security detection based on the feature values corresponding to the standard format may specifically be as follows: when the target request parameters of the new business request are in the target standard format, it is determined whether the target request parameters meet the feature values of the target standard format; if satisfied, the target request parameters are added to the whitelist, otherwise the target request parameters are subjected to the conventional defense process.

In the implementation, after receiving a new business request, if finding that the target request parameters of the new business request are in the target standard format, the WAF may call the feature values corresponding to the target standard format, and then compare the target request parameters with the feature values. If the target request parameters meet the feature values corresponding to the target standard format, the target request parameters may be directly added to the whitelist; and if the target request parameters do not meet the feature values corresponding to the target standard format, the target request parameters are subjected to the conventional defense process of the WAF.

In an embodiment, the process of performing security detection based on the feature values of custom-type may specifically be as follows: when the target request parameter of the new business request belongs to the custom type, it is determined whether the value length of the target request parameter is the same as that of the custom type, and whether all numeric characters are in the numeric character set; if it is, the target request parameter is added to the whitelist, otherwise the target request parameters is subjected to the conventional defense process.

In the implementation, after the WAF receives a new business request, if it finds that the target request parameter of the new business request belongs to the custom type, it may be first judged whether the value length of the target request parameter is consistent with that of the custom type. If they are consistent, it may be further judged whether all numeric characters of the target request parameter belong to the numeric character set in the custom type; if they all belong to the numeric character set, the target request parameter may be added to the whitelist; if the value lengths of the target request parameter are inconsistent or there are numeric characters that do not belong to the numeric character set, the target request parameter is subjected to the conventional defense process.

In an embodiment, the method for determining the feature values of the parameter type of the non-fixed-length parameter may be as follows: for the pure numeric type, the average value and the standard deviation of the value length of the pure numeric type are used as the feature values of the parameter type; for the long text type or short text type, the average value and standard deviation of the value length corresponding to the parameter type are calculated, the statistical value fluctuation range is calculated and generated through the preset probability algorithm, and the average value, standard deviation and statistical value fluctuation range are determined as the feature values of the parameter type.

In the implementation, based on the processing of step 102, the parameter types of non-fixed-length parameters may be divided into three types, namely pure numeric type, long text type, and short text type. On the one hand, for the pure numeric type, the WAF may calculate the average value and standard deviation of the value length of all parameter values of the pure numeric type, and determine the average value and standard deviation as the feature values of the pure numeric type; on the other hand, for the long text type or short text type, the WAF may calculate the average value and standard deviation of the value length of all parameter values of the corresponding parameter type, calculate and generate the statistical value fluctuation range through the preset probability algorithm at the same time, and determine the average value, the standard deviation and the statistical value fluctuation range as the feature values of the corresponding parameter type.

The preset probability algorithm may specifically be an algorithm for checking the character distribution probability. For the short text type, the preset probability algorithm may use a Markov chain algorithm, specifically calculate and generate statistics probability matrix through the Markov chain algorithm, and determine the statistical value fluctuation range of the short text type through the statistical probability matrix. The process may be as follows:

1. First the numeric character set of all short text type are generated;

2. The probability that each character is the first character, which may be called the head-position probability, is counted. It may be shown in the following table:

| Legal character | a | c | d | 1 | 2 |
|---|---|---|---|---|---|
| Head-position probability | 0.4 | 0.1 | 0.1 | 0.2 | 0.2 |

3. The probability that each character is the last character, which may be called the tail-position probability, is counted. It may be shown in the following table:

| Legal character | b | c | f | 1 | 9 |
|---|---|---|---|---|---|
| Tail-position probability | 0.3 | 0.2 | 0.2 | 0.1 | 0.2 |

4. The probability of any two characters are connected with each other, which may be called co-occurrence probability, is counted. It may be shown in the following table:

| | a | b | c | d |
|---|---|---|---|---|
| a | 0 | 0.5 | 0.33 | 0.17 |
| b | 0.21 | 0 | 0.368 | 0.421 |
| c | 0 | 0 | 0.33 | 0.67 |

(continued)

|   | a | b | c | d |
|---|---|---|---|---|
| d | 0.353 | 0.353 | 0.176 | 0.118 |

The intersection of row a and column b indicates that the probability of b after a in the tuple ab is 0.5, and the intersection of row c and column d indicates that the probability of d after c in the tuple cd is 0.67.

5. The statistical probability matrix is generated according to the head-position probability, the tail-position probability and the co-occurrence probability. It may be shown in the following table:

|   | a | b | c | d |
|---|---|---|---|---|
| a | 0 | 0.5 | 0.33 | 0.17 |
| b | 0.21 | 0 | 0.368 | 0.421 |
| c | 0 | 0 | 0.33 | 0.67 |
| d | 0.353 | 0.353 | 0.176 | 0.118 |
| P(*|start) | 0.3 | 0.2 | 0.4 | 0.1 |
| P(end|*) | 0.5 | 0.15 | 0.15 | 0.2 |

6. The corresponding statistical value of each short text type is calculated based on the statistical probability matrix:

Take the sample "abcbad" for example. The corresponding score is: Score = (P (a|start) + P (b|a) + P (c|b) + P (b|c) + P (a|b) + P (d|a) + P (end|d))/(len ("abcbad") + 1).

7. The statistical value fluctuation range corresponding to the short text type is determined according to the statistical value corresponding to each short text type.

For the long text type, the preset probability algorithm may be the chi-square check algorithm. Specifically, the chi-square ideal frequency distribution matrix may be generated by the chi-square check algorithm, and the statistical value fluctuation range corresponding to the long text type may be determined by the chi-square ideal frequency distribution matrix. The process may be as follows:

1. First, the numeric character set for all long text type is generated.

2. The average number of occurrences of each character is counted:

For example, in 10 long texts, a appears 22 times and b appears 12 times. Then the average numbers of occurrences of each character, which may be called $e_i$, are shown in the following table:

| Legal character | a | b | c | e | f | 1 | 2 |
|---|---|---|---|---|---|---|---|
| Occurrence frequency | 2.2 | 1.2 | 2.3 | 6.4 | 3.4 | 5.7 | 8.9 |

3. The number of occurrences of each character in a single sample in a single long text is calculated:

Taking the long text "ab1cefabcf11" as an example, the number of occurrences of each character in a single sample, which may be called $a_i$, are shown in the following table:

| Legal character | a | b | c | e | f | 1 | 2 |
|---|---|---|---|---|---|---|---|
| Number of occurrences | 2 | 2 | 2 | 1 | 2 | 3 | 0 |

4. The statistical value of a single long text is calculated according to the average number of occurrences and the number of occurrences in a single sample. The calculation formula of statistical value may be:

$$x^2 = \frac{(a_1 - e_1)^2}{e_1} + \frac{(a_2 - e_2)^2}{e_2} + \frac{(a_3 - e_3)^2}{e_3} + \cdots$$

5. The statistical value fluctuation range corresponding to the long text type is determined according to the statistical value of each long text.

In an embodiment, the process of performing security detection based on the feature values of pure numeric type may specifically be as follows: when the target request parameter of the new business request is of the pure numeric type, it is determined whether the difference between the value length of the target request parameter and the average value of the value length corresponding to the pure numeric type is less than N times the size of the standard deviation of the value length corresponding to the pure numeric type; if it is, the target request parameter is added to the whitelist, otherwise the target request parameter is subjected to the conventional defense process.

In the implementation, after the WAF receives a new business request, if it finds that the target request parameter of the new business request is entirely composed of Arabic numerals, it may be considered that the target request parameter is of the pure numeric type, and then the average value and standard deviation of the value length of the pure numeric type may be used to detect the target request parameter. If the difference between the value length of the target request parameter and the average value of the value length corresponding to the pure value type is less than N times the size of the standard deviation of the value length corresponding to the pure value type, the target request parameters may be directly added to the whitelist, otherwise the target request parameter is subject to the conventional defense process of the WAF.

In an embodiment, the process of performing security detection based on the feature values of the long text type or the short text type may specifically be as follows: when the target request parameter of the new business request is of the long text type or the short text type, it is determined whether the difference between the value length of the target request parameter and the average value of the value length corresponding to the long text type or short text type is less than N times the size of the standard deviation of the value length corresponding to the long text type or short text type, and whether the statistical value of the target request parameter calculated by the preset probability algorithm is within the statistical value fluctuation range; if it is, the target request parameter is added to the whitelist, otherwise the target request parameter is subjected to the conventional defense process.

In the implementation, after the WAF receives the new business request, if it finds that the target request parameter of the new business request is of the long text type or the short text type, the average value and standard deviation of the value length of the corresponding parameter type may be used to detect the target request parameter. If the difference between the value length of the target request parameter and the average value of the value length of the corresponding parameter type is less than N times the size of the standard deviation of the value length of the corresponding parameter type, the statistical value of the target request parameter may be further calculated by the preset probability algorithm, and then it is determined whether the statistical value of the target request parameter is within the statistical value fluctuation range of the corresponding parameter type, otherwise the target request parameter may be subjected to the conventional defense process of the WAF. If the statistical value of the target request parameter is within the fluctuation range, the target request parameter may be added to the whitelist, otherwise, the target request parameter may be subjected to the conventional defense process of the WAF.

If the target request parameter is of the short text type, when the Markov chain algorithm is used to generate the statistical value fluctuation range, the statistical value of the target request parameter may be calculated by the Markov chain algorithm. Taking the short text "abcd" as an example, firstly, a binary split is performed on it and a statistical probability matrix is generated; then whether there is a value of 0 in P(a|start), P(b|a), P(c|b), P(d|c), P(end|d) is checked, if there is, the target request parameter may be directly confirmed to be abnormal; furthermore, the statistical value of the target request parameter is calculated according to the formula "Score= $\Sigma P(ai+1|ai)/(n+1)$". If the target request parameter is of the long text type, when the chi-square check algorithm is used to generate the statistical value fluctuation range, the statistical value of the target request parameter may be calculated by the chi-square check algorithm: for the long text, the number of occurrences of each character in a single sample may be calculated first, and then the statistical value of the target request parameter may be calculated with the average number of occurrences of each character in the numeric character set of the long text type.

It is worth mentioning that, for the enumerated type, the aggregated parameter value set may be directly determined as the feature values of the enumerated type, and during the security detection, whether the value of the request parameter of the new business request is in the parameter value set may also be directly determined, if it is, the target request parameter may be added to the whitelist, otherwise the target request parameter may be subjected to the conventional defense process of the WAF.

In the embodiment of the present disclosure, the parameter values of each request parameter of multiple business requests to be learned are aggregated to obtain value sets of each request parameter; the parameter types of the request parameters are determined based on the number of values, the value length, and the value format in each value set through machine learning technology; the feature values of the parameter type of each request parameter are generated, and the security detection on the new business request is performed based on the feature values. In this way, machine learning is performed for business requests of different enterprise business systems, and the same request parameters of the same parameter type are aggregated according to a certain algorithm, to calculate the feature values of the different parameter types, and then the business request is added to the whitelist according to the feature values. Therefore, the WAF may quickly and efficiently filter out a large number of normal business requests before the conventional defense process, reducing the security protection burden of the WAF. The present disclosure may adapt to the security detection needs of various enterprise business systems, does not require manual configuration and has strong applicability, high accuracy, and simple and convenient process.

Based on the same technical concept, the embodiments of the present disclosure further provide a whitelist self-learning device based on machine learning technology. As shown in FIG. 2, the device includes:

an aggregation module 201, configured to aggregate the parameter values of each request parameter of multiple business requests to be learned to obtain a value set corresponding to each of the request parameters;
a classification module 202, configured to determine the parameter types of the request parameters based on the number of values, the value length and the value format of each value set through machine learning technology;
a detection module 203, configured to generate feature values of the parameter types of each of the request parameters, and perform security detection on a new business request based on the feature values.

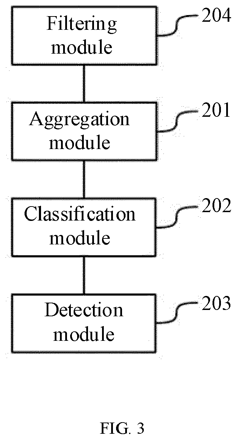

In an embodiment, as shown in FIG. 3, the device further includes a filtering module 204, which is configured to:

determine, when receiving the target business request, whether the target business request is a static file request or a parameterless request, or whether it contains request parameters with no parameter value;
ignore the target business request if it is, otherwise set the target business request as the business request to be learned.

In an embodiment, the classification module 202 is specifically configured to:

determine, when the number of values in the value set is less than the preset count threshold, that the request parameter is of the enumerated type, otherwise detect the value length in the value set;
determine, when the value lengths in the value set are the same, the parameter type of the request parameter according to the value format in the value set;
determine, when the value lengths in the value set are different, the parameter type of the request parameter according to the value length and value content.

In an embodiment, the classification module 202 is specifically configured to:

compare, when the lengths of the value in the value set are the same, all the parameter values in the value set with the preset standard format one by one;
determine, when all the parameter values conform to the target standard format, that the request parameter is of the parameter type corresponding to the target standard format;
determine, when all the parameter values do not match with all the standard formats, that the parameter type of the request parameter is of the custom type;
wherein, the standard formats include at least ID card number format, bank card number format, mobile phone number format, fixed telephone number format, date format, time stamp format, and IP address format.

In an embodiment, the detection module 203 is specifically configured to:

generate a format template corresponding to the standard format for a parameter type corresponding to any standard format, and use the format template as a feature value of the parameter type;
take the value length corresponding to the custom type and the numeric character set of all the request parameters as the feature values of the parameter type, for the custom type.

In an embodiment, the detection module 203 is specifically configured to:

determine, when the target request parameter of the new business request is in the target standard format, whether the target request parameter meets the feature values corresponding to the target standard format;
add the target request parameter to the whitelist if satisfied, otherwise, perform the conventional defense process on the target request parameter.

In an embodiment, the detection module 203 is specifically configured to:

determine, when the target request parameter of the new business request is of the custom type, whether the value length of the target request parameter is consistent with the value length corresponding to the custom type, and whether all numeric characters are in the numeric character set;
add the target request parameter to the whitelist if it is, otherwise, perform the conventional defense process on the target request parameter.

In an embodiment, the classification module 202 is specifically used to:

determine, when the value lengths in the value set are different, whether the data content in the value set are pure numeric values;
determine that the parameter type of the request parameter is the pure numeric type, when the value lengths in the value set are different, otherwise judge whether the value length is greater than the preset length threshold;
determine that the request parameter is of the long text type if it is, otherwise determine that the request parameter is of the short text type.

In an embodiment, the detection module 203 is specifically configured to:

for the pure numeric type, take the average value and standard deviation of the value length corresponding to the pure numeric type as the feature values of the parameter type;
for the long text type or short text type, calculate the average value and standard deviation of the value length corresponding to the parameter type, calculate and generate the statistical value fluctuation range through the preset probability algorithm, and determine the average value, the standard deviation and the fluctuation range of the statistical value as the feature values of the parameter type.

In an embodiment, the detection module 203 is specifically configured to:

judge, when the target request parameter of the new business request is of the pure numeric type, whether the difference between the value length of the target request parameter and the average value of the value length corresponding to the pure numeric type is less than N times the size of the standard deviation of value length corresponding to the pure numeric type;
add the target request parameter to the whitelist if it is, otherwise, perform the conventional defense process on the target request parameter.

In an embodiment, the detection module 203 is specifically configured to:

judge, when the target request parameter of the new business request is of the long text type or short text type, whether the difference between the value length of the target request parameter and the average value of the value length corresponding to the long text type or short text type is less than N times the size of the standard deviation of the value length corresponding to the long text type or short text type, and whether the statistical value of the target request parameter calculated by the preset probability algorithm is within the statistical value fluctuation range;
add the target request parameter to the whitelist if it is, otherwise, perform the conventional defense process on the target request parameter.

In the embodiments of the present disclosure, the parameter values of each request parameter of multiple business requests to be learned are aggregated to obtain value sets corresponding to each request parameter; the parameter types of the request parameters are determined based on the number of values, the value length, and the value format in each value set through machine learning technology; the feature values of the parameter type of each request parameter are generated, and the security detection on the new business request is performed based on the feature values. In this way, machine learning is performed for business requests of different enterprise business systems, and the same request parameters of the same parameter type are aggregated according to a certain algorithm, to calculate the feature values of the different parameter types, and then the business request is added to the whitelist according to the feature values. Therefore, the WAF may quickly and efficiently filter out a large number of normal business requests before the conventional defense process, reducing the security protection burden of the WAF. The present disclosure may adapt to the security detection needs of various enterprise business systems, does not require manual configuration and has strong applicability, high accuracy, and simple and convenient process.

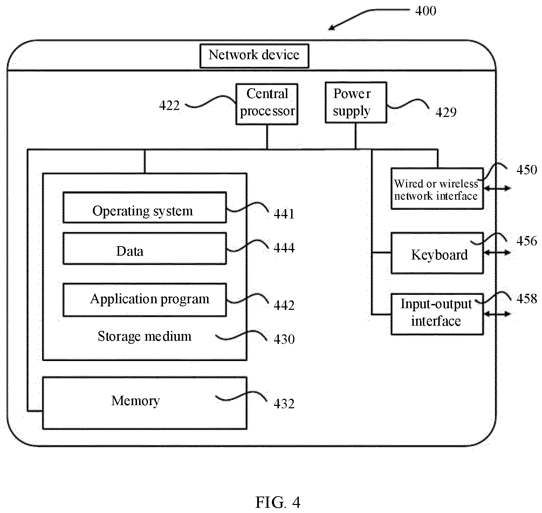

FIG. 4 is a structural schematic diagram of a network device provided by the embodiments of the present disclosure. The network device 400 may have a relatively large difference due to different configurations or performance, and may include one or more central processors 422 (for example, one or more processors), a memory 432, and one or more storage application programs 442 or the storage medium 430 of the data 444 (for example, one or one mass storage device). The memory 432 and the storage medium 430 may be short-term storage or persistent storage. The program stored in the storage medium 430 may include one or more modules (not shown in the figure), and each module may include a series of instruction operations on the network device 400. Furthermore, the central processor 422 may be configured to communicate with the storage medium 430 and execute a series of instruction operations in the storage medium 430 on the network device 400.

The network device 400 may also include one or more power supplies 429, one or more wired or wireless network interfaces 450, one or more input-output interfaces 458, one or more keyboards 456, and/or, one or one operating systems 441, such as Windows Server, Mac OS X, Unix, Linux, FreeBSD, etc.

The network device 400 may include a memory, and one or more programs stored in the memory and configured to be executed by one or more processors, including instructions for performing the above-mentioned whitelist self-learning based on machine learning technology.

Those skilled in the art may appreciate that all or some steps that realize the above-described embodiments may be implemented through hardware, or may be implemented by instructing related hardware through a program which may be stored in a computer readable storage medium. The storage medium may be a read-only memory, a magnetic disc, or a compact disc.

The above-described are only preferable embodiments of the present disclosure, but are not used to impose a limitation to the present disclosure. Any amendment, equivalent substitution and improvement made within the spirit and principle of the present disclosure shall be included in the protection scope of the present disclosure.

## Claims

1. A whitelist self-learning method based on machine learning technology, comprising:

   aggregating parameter values of each request parameter of multiple business requests to be learned, to obtain value sets corresponding to each of the request parameters;
   determining parameter types of the request parameters based on a number of values, a value length and value format of each of the value sets through machine learning technology;
   generating feature values of the parameter types of each of the request parameters, and performing security detection on a new business request based on the feature values.

2. The method according to claim 1, wherein before aggregating the parameter values of each request parameter of multiple business requests to be learned to obtain value sets corresponding to each of the request parameters, the method further comprises:

   determining, when receiving the target business request, whether a target business request is a static file request, a parameterless request, or whether the target business request contains request parameters without parameter value;
   ignoring the target business request, if it is, otherwise setting the target business request as the business request to be learned.

3. The method according to claim 1, wherein determining the parameter types of the request parameters based on number of values, value length and value format of each of the value sets through machine learning technology comprises:

   determining, when the number of values in the value set is less than a preset count threshold, that the request parameters are of an enumerated type , otherwise detecting the value length in the value set;
   determining, when the value lengths in the value set are the same, the parameter type of the request parameter according to the value format in the value set;
   determining, when the value lengths in the value set are different, the parameter type of the request parameter according to the value length and value content.

4. The method according to claim 3, wherein determining, when the value lengths in the value set are the same, the parameter type of the request parameter according to the value format in the value set comprises:

   comparing, when the value lengths in the value set are the same, all the parameter values in the value set with the preset standard formats one by one;
   determining, when all the parameter values conform to a target standard format, that the request parameter is of the parameter type corresponding to the target standard format;

determining, when all the parameter values do not match with all the standard formats, the parameter type of the request parameter as a custom type;

wherein the standard format comprises at least an ID card number format, a bank card number format, a mobile phone number format, a fixed telephone number format, a date format, a time stamp format, and an IP address format.

5. The method according to claim 4, wherein generating feature values of the parameter types of each of the request parameters comprises:

for the parameter type corresponding to any standard format, generating a format template corresponding to the standard format and using the format template as the feature value of the parameter type;

for the custom type, using the value length corresponding to the custom type and the numeric character set of all the request parameters as the feature value of the parameter type.

6. The method according to claim 5, wherein performing security detection on a new business request based on the feature values comprises:

determining, when the target request parameter of the new business request is in the target standard format, whether the target request parameter meets the feature value corresponding to the target standard format;

adding the target request parameter to the whitelist, if satisfied, otherwise, performing conventional defense process on the target request parameter.

7. The method according to claim 5, wherein performing security detection on a new business request based on the feature values comprises:

when the target request parameter of the new business request is of the custom type, determining whether the value length of the target request parameter is consistent with the value length corresponding to the custom type, and whether all the numeric characters are in the numeric character set;

adding the target request parameter to the whitelist, if it is, otherwise, performing the conventional defense process on the target request parameter.

8. The method according to claim 3, wherein determining, when the value lengths in the value set are different, the parameter type of the request parameter according to the value length and value content comprises:

determining, when the value lengths in the value set are not the same, whether the data content in the value set is pure numeric value;

determining that the parameter type of the request parameter is the pure numeric type, if it is, otherwise determining whether the value length is greater than a preset length threshold;

determining that the parameter type of the request parameter is a long text type if it is greater, otherwise determining that the parameter type of the request parameter is a short text type.

9. The method according to claim 8, wherein generating feature values of the parameter types of each of the request parameters comprises:

taking, for the pure numeric type, the average value and standard deviation of the value length corresponding to the pure numeric type as the feature values of the parameter types;

calculating, for the long text type or short text type, the average value and standard deviation of the numerical length corresponding to the parameter type, calculating and generating a statistical value fluctuation range through a preset probability algorithm, and determining the average value, the standard deviation and the statistical value fluctuation range as the feature values of the parameter type.

10. The method according to claim 9, wherein performing security detection on a new business request based on the feature values comprises:

determining, when the target request parameter of the new business request is of the pure numeric type, whether the difference between the value length of the target request parameter and the average value of the value length corresponding to the pure numeric type is less than N times the size of the standard deviation of the value length corresponding to the pure numeric value type;

adding the target request parameter to the whitelist if it is, otherwise, performing the conventional defense process on the target request parameter.

11. The method according to claim 9, wherein performing security detection on the new business request based on the feature values comprises:

determining, when the target request parameter of the new business request is of the long text type or short text type, whether the difference between the value length of the target request parameter and the average value of the value length corresponding to the long text type or short text type is less than N times the size of the standard deviation of the value length corresponding to the long text type or short text type, and whether the statistical value of the target request parameter calculated by the preset probability algorithm is within the statistical value fluctuation range;
adding the target request parameter to the whitelist if it is, otherwise, performing the conventional defense process on the target request parameter.

12. A whitelist self-learning device based on machine learning technology, wherein the device comprises:

an aggregation module, configured to aggregate parameter values of each request parameter of multiple business requests to be learned to obtain value sets corresponding to each of the request parameters;
a classification module, configured to determine parameter types of the request parameter based on the number of values, the value length and the value format of each value set through machine learning technology;
a detection module, configured to generate a feature value of the parameter type of each of the request parameters, and perform security detection on the new business request based on the feature value.

13. The device according to claim 12, wherein the classification module is specifically configured to:

determine, when the number of values in the value set is less than a preset count threshold, that the request parameter is of an enumerated type, otherwise detecte the value length in the value set;
determine, when the value lengths in the value set are the same, the parameter type of the request parameter according to the value format in the value set;
determine, when the value lengths in the value set are different, the parameter type corresponding to the request parameter according to the value length and value content.

14. A network device, wherein the network device includes a processor and a memory storing at least one instruction, at least one segment of program, a code set, or an instruction set which are loaded and executed by the processor to implement the whitelist self-learning method based on machine learning technology according to any one of claims 1 to 11.

15. A computer-readable storage medium, storing at least one instruction, at least one segment of program, a code set or an instruction set which are loaded and executed by a processor to implement the whitelist self-learning method based on machine learning technology according to any one of claims 1 to 11.

Aggregate the parameter values of each request parameter of multiple business requests to be learned, to obtain value sets corresponding to each of the request parameters ⌐201

Determine the parameter types corresponding to the request parameters based on the number of values, the value length, and the value format of each value set through machine learning technology ⌐202

Generate feature values of the parameter types corresponding to each of the request parameters, and perform security detection on a new business request based on the feature values ⌐203

FIG. 1

Aggregation module ⌐201

Classification module ⌐202

Detection module ⌐203

FIG. 2

Filtering module ⌐204

Aggregation module ⌐201

Classification module ⌐202

Detection module ⌐203

FIG. 3

FIG. 4

## INTERNATIONAL SEARCH REPORT

| International application No. |
| --- |
| **PCT/CN2020/079353** |

| A. | CLASSIFICATION OF SUBJECT MATTER |
| --- | --- |
| | H04L 29/06(2006.01)i |

According to International Patent Classification (IPC) or to both national classification and IPC

| B. | FIELDS SEARCHED |
| --- | --- |

Minimum documentation searched (classification system followed by classification symbols)

H04L29/06

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 学习, 机器学习, 白名单, 请求, 参数, 业务, 类型, 检测, 阈值, 特征值, learning, machine, white list, request, parameter, service, type, detect, threshold, feature, characteristic

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105656886 A (BEIJING UNIVERSITY OF POSTS AND TELECOMMUNICATIONS et al.) 08 June 2016 (2016-06-08) <br> claims 1-10, and description, paragraphs [0070]-[0152] and [0184] | 1, 2, 12, 14, 15 |
| A | CN 103729594 (SHANDONG CIVIC SE COMMERCIAL MIDDLEWARE CO., LTD.) 16 April 2014 (2014-04-16) <br> entire document | 1-15 |
| A | CN 109714341 A (XIAMEN FUYUN INFORMATION TECHNOLOGY CO., LTD.) 03 May 2019 (2019-05-03) <br> entire document | 1-15 |
| A | CN 110661680 A (SHENZHEN Y&D ELECTRONICS INFORMATION CO., LTD.) 07 January 2020 (2020-01-07) <br> entire document | 1-15 |
| A | US 2018139222 A1 (BEIJING HANSIGHT TECHNOLOGY CO., LTD.) 17 May 2018 (2018-05-17) <br> entire document | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 November 2020** | **17 November 2020** |

| Name and mailing address of the ISA/CN <br><br> **China National Intellectual Property Administration (ISA/ CN)** <br> **No. 6, Xitucheng Road, Jimenqiao Haidian District, Beijing 100088** <br> **China** | Authorized officer |
| --- | --- |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/079353**

| Patent document cited in search report | | | Publication date (day/month/year) | Patent family member(s) | | | Publication date (day/month/year) |
|---|---|---|---|---|---|---|---|
| CN | 105656886 | A | 08 June 2016 | None | | | |
| CN | 103729594 | | 16 April 2014 | None | | | |
| CN | 109714341 | A | 03 May 2019 | None | | | |
| CN | 110661680 | A | 07 January 2020 | None | | | |
| US | 2018139222 | A1 | 17 May 2018 | CN | 106209488 | A | 07 December 2016 |
| | | | | WO | 2016173327 | A1 | 03 November 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010088877